# EUROPÄISCHE PATENTSCHRIFT

(11) **EP 1 413 463 B1**
(45) Veröffentlichungstag und Bekanntmachung des Hinweises auf die Patenterteilung: **02.11.2006**
(21) Anmeldenummer: 03020376.4
(22) Anmeldetag: 10.09.2003
(51) Int. Cl.: B60H 1/00

(54) **Anordnung zur Ermittlung der Innenraumtemperatur**
Arrangement for the determination of the interior temperature
Ensemble de détermination de la température à l'interieur

(30) Priorität: 24.10.2002 DE 10249583
(43) Veröffentlichungstag der Anmeldung: 28.04.2004
(73) Patentinhaber: Preh GmbH, 97616 Bad Neustadt a.d. Saale (DE)
(72) Erfinder: Gutbrod, Thomas, Dr., 97291 Thüngersheim (DE); Jeitner, Martin, 97645 Ostheim (DE); Oenning, Günther, 97618 Niederlauer (DE); Schelbert, Harald, Dr., 97631 Bad Königshofen (DE)
(74) Vertreter: Dietrich, Barbara

(56) Entgegenhaltungen:
- WO-A-01/30597
- DE-A- 4 127 690
- DE-A- 19 711 033
- DE-C- 4 142 648
- DE-C- 19 728 803
- US-A- 2 900 821

## Beschreibung

Die Erfindung betrifft eine Anordnung zur Ermittlung der Innenraumtemperatur in einem Kraftfahrzeug für die automatische Regelung derselben.

Zur automatischen Regelung der Innenraumtemperatur in einem Fahrzeug ist es erforderlich, die tatsächliche Innenraumtemperatur zu einem bestimmten Zeitpunkt zu kennen. Zur Regelung wird dann eine Stellgröße gebildet, welche die Abweichung der tatsächlichen Innenraumtemperatur von der angestrebten Innenraumtemperatur widerspiegelt.

Zur Bestimmung der Innenraumtemperatur wird überlicherweise mit Hilfe eines Innenfühlergebläses Luft aus dem Fahrzeuginnenraum in das Klimateil angesaugt, welche an einem Temperaturfühler vorbei strömt, bevor sie in das Gebläse gelangt. Das Bedienteil weist hierzu eine Öffnung zum Fahrzeuginnenraum, abgedeckt durch eine Schlitzmaske oder ein Gitter, auf. Ein dahinter befindlicher Schacht leitet die Luft am Temperaturfühler zum Gebläse weiter, wobei das Gehäuse so gestaltet ist, dass die Luft in der Regel auf der Rückseite des Gehäuses dieses verläßt.

Aus der DE 197 11 033 A1 ist eine Heizungs-, Lüftungs- und/oder Klimaanlage mit Temperaturregelung, insbesondere für Kraftfahrzeuge bekannt. Ein Temperaturfühler, welcher Meßwerte zur Temperatur der erwärmten Luft in einem ersten Kanal liefert, ist an der hinteren Wand des Kanals angebracht. In Abhängigkeit von der eingegebenen Temperatur und der erfaßten Temperatur sowie einem vorbestimmten Verlauf der Temperaturunterschiede zwischen den Belüftungsauslässen und den Fußraumauslässen erfolgt dann die Positionierung der Regelklappe.

Nachteilig bei derartigen Lösungen sind die Kosten für einen Lüfter als auch die damit verbundenen hörbaren Geräusche.

Aus diesem Grunde gibt es Bestrebungen, die Bestimmung der Stellgröße für die Klimaregelung ohne Gebläse durchzuführen.

Die DE 41 27 690 C2 zeigt ein Steuergerät für eine Klimaanlage auf, wo die Ermittlung der Stellgröße mittels einer Gesichtshauttemperatur-Erfassungseinrichtung und einer Steuereinrichtung auf Basis eines Temperaturempfindlichkeitswerts erfolgt. Hier wird die Größe der Innenraumtemperatur selber nicht ermittelt.

Eine Reihe weiterer Lösungsansätze bestehen in der Nutzung von unbelüfteten Systemen, wobei der Sensor innerhalb des Gehäuses des Klimabedienteils angeordnet ist, wie beispielsweise in der DE 197 28 803 C1 offenbart.

Die DE 197 28 803 C1 offenbart eine Anordnung zur Temperaturmessung und/oder -regelung mit einem Gehäuse, das in seinem Innern einen Temperaturfühler zur Messung der außerhalb des Gehäuses gegebenen Raumtemperatur aufweist, wobei eine oder mehrere Wärmequellen in und/oder an dem Gehäuse vorhanden sind. Zusätzlich ist zumindest ein Hilfstemperaturfühler innerhalb des Gehäuses an einer Stelle vorgesehen, deren Temperatur durch den Wärmestrom der Wärmequelle stärker beeinflußt wird als die Temperatur am Temperaturfühler.

Ein wesentlicher Nachteil dieser Lösung ist die große Abweichung des gemessenen Temperatursignals von der tatsächlichen Innenraumtemperatur aufgrund der Störeinflüsse auf den Sensor, sowie die große Trägheit des Sensors, der Änderungen der Innenraumtemperatur nur zeitlich verzögert und geglättet erfährt.

Die Erfindung stellt sich die Aufgabe, eine Anordnung zur Ermittlung der Innenraumtemperatur aufzuzeigen, mit der eine einfache und genauere Ermittlung möglich ist.

Gelöst wird die Aufgabe durch die Merkmale der Patentanspruchs 1. DE 4 142 648 offenbart den Oberbegriff des Anspruchs 1.

Der Erfindung liegt die Idee zugrunde, einen Temperaturfühler bzw. -sensor mit Hilfe von Konvektion zu belüften. Damit können die Vorteile einer direkten Messung der Temperatur der Raumluft erhalten werden, ohne dass die Nachteile eines Lüfters auftreten.

Hierzu wird im Bedienteil ein Schacht möglichst vertikal eingebaut und beheizt. In der einfachsten Ausführung ist dieser Konvektionsschacht direkt hinter einer Lufteinlaßöffnung angebracht. Dabei kann dieser schräg nach hinten (von der Frontblende weg) verlaufen. Ist der Konvektionsschacht hingegen parallel zur Frontblende angebracht, befindet sich ein zweiter (Verbindungs-)Schacht zwischen der Lufteinlaßöffnung an der Bedienteilfront und der unteren Öffnung des Konvektionsschachts, wodurch eine geschlossene Luftführung vom Fahrzeuginnenraum zum Konvektionsschacht gewährleistet und einen Luftaustausch mit dem Inneren des Klimagerätes verhindert wird.
Durch die Heizung im Schacht wird die Luft erwärmt, steigt nach oben und tritt am oberen Ende bzw, der oberen Öffnung des Konvektionsschachts aus. Die obere Auslaßöffnung des Konvektionsschachts befindet sich im oberen Bereich des Steuergerätes bzw. des Bedienteils, wobei die Auslaßöffnung bevorzugt nach oben weist. Die aufsteigende Luft im Konvektionsschacht führt zu einem Unterdruck an der unteren Öffnung des Konvektionsschachts, was ein Nachströmen von Luft aus dem Fahrzeuginnenraum bewirkt, die am Temperaturfühler vorbei geführt wird, der in unmittelbarer Nähe an der unteren Öffnung angeordnet ist. Somit wird die Lufttemperatur gemessen, die die Luft besitzt, wenn sie in den Konvektionsschacht eintritt, bevor sie in diesem erwärmt wird.

Als Heizquelle kann ein Widerstandsdraht verwendet werden, welcher im oberen Bereich um ein Kupferrohr gewickelt ist, das den Konvektionsschacht bildet. Alternativ können aber auch eine Heizfolie oder im Schacht verlegte Widerstände verwendet werden. In diesen Fällen ist auch ein Einsatz von Kunststoff als Konvektionsschacht möglich, der zudem direkt an der Frontblende angeformt sein kann.

In Weiterführung der Erfindung ist auch ein schräg nach hinten verlaufender Schacht als eine weitere Variante vorgesehen. Dies ermöglicht eine Verlängerung des Konvektionsschachts über das Bedienteil hinaus.

In bevorzugter Ausführung ist über dem Auslaß der leicht erwärmten Luft kein weiteres Gerät verbaut, um eine Beeinträchtigung der Strömung der Luft zu vermeiden.

Auch die Störgröße Gitter, welches sich z.B. durch Absorption von Sonnenstrahlung oder durch Wärmeleitung vom Bedienteil her auf eine Temperatur erwärmen kann, welche höher ist als die Lufttemperatur im Fahrgastraum, wird in Weiterführung der Erfindung mit geeigneten Maßnahmen ermittelt und berücksichtigt, um eine gute Temperaturmessung innerhalb des belüfteten Schachts zu erreichen. Dabei ist es wichtig, durch den Luftstrom die betreffenden Teile des Gitters bis in die Nähe der Raumtemperatur abzukühlen, hierbei aber die einströmende Luft nicht wesentlich zu erwärmen, wozu in einfacher Weise eine Mindestluftmenge notwendig ist, was beispielsweise durch eine geeignete Geometriewahl der Luftführung im Bedienteil bewirkt werden kann.

Des Weiteren ist vorgesehen, um die Meßergebnisse bzw. Temperaturverfälschungen innerhalb der zulässigen Toleranzgrenzen zu halten, eine Referenzgröße für die Temperaturverfälschung durch den Konvektionsschacht zu ermitteln. Als gute Referenz für eine derartige Kompensation hat sich die Messung der Luft am Ausgang des Konvektionsschachts erwiesen. Mit Hilfe dieser Größe läßt sich eine Korrekturgröße aus der Temperaturänderung der Luft im Konvektionsschacht gewinnen, errechnet aus der Differenz der Auslaßtemperatur und der Einlaßtemperatur des Konvektionsschachts, da sich gezeigt hat, dass der Fehler der Innentemperaturmessung sich annähernd linear zur Temperaturänderung im Konvektionsschacht verhält.

Es versteht sich, dass eine Kompensation auch mit einem weiteren Temperatursensor möglich ist, der an einem anderen Ort innerhalb des Klimasteuergerätes verbaut ist.

Eine weitere Optimierung der Genauigkeit der Temperaturmessung kann zudem durch Berücksichtigung der aktuellen Strömungsverteilung im Fahrzeug erreicht werden. Hierzu werden die aktuellen Einstellungen verschiedener Belüftungsklappen des Klimagerätes sowie die Gebläseleistung und die Einblastemperatur der Luft über den fahrzeugeigenen Datenbus ausgelesen und entsprechende Korrekturparameter für die Bestimmung der Innenraumlufttemperatur berücksichtigt.

Anhand eines Ausführungsbeispiels mit Zeichnung soll der Erfindung näher erläutert werden.

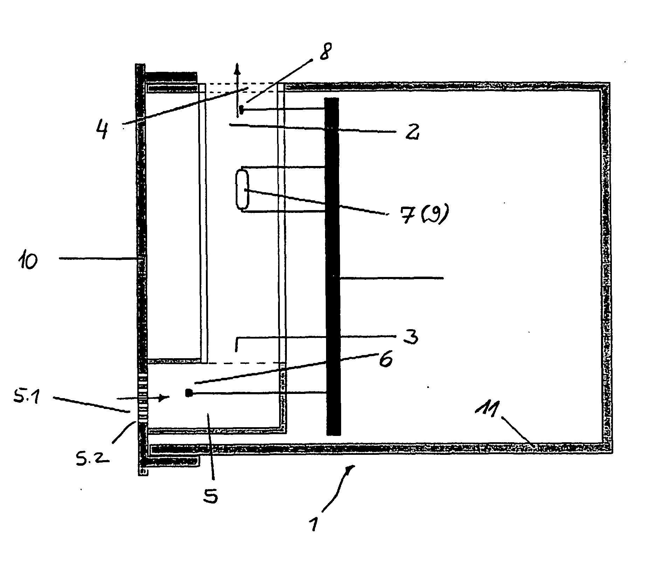

Es zeigt die einzige Figur die wichtigsten Details der Anordnung, die vorzugsweise in einem Bedienteil 1 einer nicht näher dargestellten Klimaanlage integriert ist. Diese Anordnung besteht aus einem ersten Schacht 2, dem Konvektionsschacht, der eine untere Öffnung 3, einen Einlaß, und eine obere Öffnung 4, einen Auslaß aufweist. Der Schacht 2 ist, wie dargestellt, senkrecht hinter einer Frontblende 10 im Gehäuse 11 des Bedienteils 1 ausgerichtet und in diesem Beispiel mit einem weiteren Schacht 5 verbunden, der seinerseits die Verbindung des Konvektionsschachts mit einem Lufteinlaß 5.1 an der Bedienteilfront 10 herstellt und am Einlaß 5.1 ein Gitter 5.2 aufweist.

Im Bereich der unteren Öffnung 3 des Konvektionsschachts 2, vorzugsweise bereits im Bereich des Einlasses 5.1 des Schachtes 5, ist ein Temperaturfühler 6 angeordnet.
Im oberen Bereich des Schachts 2 ist eine Heizquelle 7 integriert, durch die Luft erwärmt wird. Im dargestellten Beispiel sind dies im Schacht 2 angebrachte Widerstände 9 .
Die aufsteigende Luft im Konvektionsschacht 2 führt zu einem Unterdruck an der unteren Öfnnung 3 des Konvektionsschachts 2, was ein Nachströmen von Luft aus dem Fahrzeuginnenraum bewirkt, die am Temperaturfühler 6 vorbei geführt wird.

Ein weiterer Temperatursensor 8 in der Nähe bzw. an der oberen Öffnung 4 des Konvektionsschachts 2 dient dazu, die Messgenauigkeit zu erhöhen. Mit Hilfe des Temperatursensors 8 läßt sich eine Korrekturgröße aus der Temperaturänderung der Luft im Konvektionsschacht 2 gewinnen, errechnet aus der Differenz der Auslaßtemperatur und der Einlaßtemperatur des Konvektionsschachts 2.

## Patentansprüche

1. Anordnung in einem Bedienteil (1) zur Ermittlung der Innenraumtemperatur in einem Kraftfahrzeug, mit einer Regeleinrichtung, einem hinter einer Frontblende (10) vertikal oder schräg nach hinten verlaufenden Schacht (2, 5), einer ersten in einem unteren Bereich der Anordnung (1) angeordneten Öffnung (5.1) des Schachtes (2, 5), einem hinter der Öffnung (5.1) angeordneten Temperaturfühler (6), einem zweiten im oberen Bereich der Anordnung (1) angeordneten Öffnung (4) des Schachtes (2, 5) und einer im vertikalen oder schräg nach hinten verlaufenden Schacht (2, 5) angeordneten Heizeinrichtung (7, 9), zur Erzeugung einer Konvektion im Schacht (2, 5), **dadurch gekennzeichnet, dass**
- eine geschlossene Luftführung vom Fahrgastraum zum Schacht (2, 5) im Bedienteil (1) hergestellt ist, so dass ein Konvektionsschacht (2, 5) gebildet ist und dass
- in der Nähe der zweiten Öffnung (4) des Konvektionsschachtes (2, 5) ein weiterer Temperatursensor (8) angeordnet ist.

2. Anordnung in einem Bedienteil (1), **dadurch gekennzeichnet, dass** die erste und/oder zweite Öffnung (5.1, 4), mittels eines Gitters (5.2) verschlossen und hinter der Frontblende angeordnet ist.

3. Anordnung in einem Bedienteil (1) nach einem oder mehreren der vorgenannten Ansprüche, **dadurch gekennzeichnet, dass** der Konvektionsschacht (2, 5) durch ein Kupferrohr gebildet ist.

4. Anordnung in einem Bedienteil (1) nach Anspruch 3, **dadurch gekennzeichnet, dass** als Heizquelle (7) ein Widerstandsdraht verwendet wird, welcher im oberen Bereich um das Kupferrohr gewickelt ist.

5. Anordnung in einem Bedienteil (1) nach einem oder mehreren der Ansprüche 1 und 2, **dadurch gekennzeichnet, dass** der Konvektionsschacht (2, 5) aus Kunststoff gefertigt ist.

6. Anordnung in einem Bedienteil (1) nach Anspruch 5, **dadurch gekennzeichnet, dass** als Heizquelle (7) eine Heizfolie oder im Schacht verlegte Widerstände (9) verwendet ist.

7. Anordnung in einem Bedienteil (1) nach einem oder mehreren der Ansprüche 1 bis 6, **dadurch gekennzeichnet, dass** innerhalb eines Klimasteuergerätes ein weiterer Temperatursensor eingebaut ist.

8. Anordnung in einem Bedienteil (1) nach einem oder mehreren der Ansprüche 1 bis 7, **dadurch gekennzeichnet, dass** die Einstellung mindestens einer Belüftungsklappe in dem Klimasteuergerät berücksichtigbar ist.

## Claims

1. Arrangement in an operator control part (1) for determining the interior temperature in a motor vehicle, having a control device, a shaft (2, 5) which runs vertically or obliquely towards the rear behind a front panel (10), a first opening (5.1) in the shaft (2, 5), which opening is arranged in a lower region of the arrangement (1), a temperature sensor (6) which is arranged behind the opening (5.1), a second opening (4) in the shaft (2, 5), which opening is arranged in the upper region of the arrangement (1), and a heating device (7, 9), which is arranged in the shaft (2, 5) which runs vertically or obliquely towards the rear, for generating convection in the shaft (2, 5), **characterized in that**
- a closed air guide is created from the passenger compartment to the shaft (2, 5) in the operator control part (1), so that a convection shaft (2, 5) is formed, and **in that**
- a further temperature sensor (8) is arranged in the vicinity of the second opening (4) in the convection shaft (2, 5).

2. Arrangement in an operator control part (1), **characterized in that** the first and/or second opening or openings (5.1, 4) are/is closed by means of a grating (5.2) and arranged behind the front panel.

3. Arrangement in an operator control part (1) according to one or both of the abovementioned claims, **characterized in that** the convection shaft (2, 5) is formed by a copper pipe.

4. Arrangement in an operator control part (1) according to Claim 3, **characterized in that** the heat source (7) used is a resistance wire which is wound around the copper pipe in the upper region.

5. Arrangement in an operator control part (1) according to one or both of Claims 1 and 2, **characterized in that** the convection shaft (2, 5) is produced from plastic.

6. Arrangement in an operator control part (1) according to Claim 5, **characterized in that** the heat source (7) used is a heating foil or resistors (9) which are laid in the shaft.

7. Arrangement in an operator control part (1) according to one or more of Claims 1 to 6, **characterized in that** a further temperature sensor is fitted inside an air-conditioning controller.

8. Arrangement in an operator control part (1) according to one or more of Claims 1 to 7, **characterized in that** the position of at least one ventilation flap in the air-conditioning controller can be taken into account.

## Revendications

1. Ensemble dans un élément de commande (1) pour déterminer la température à l'intérieur d'un véhicule automobile, comprenant un dispositif de régulation, un conduit (2, 5) s'étendant vers l'arrière verticalement ou obliquement derrière un panneau avant (10), une première ouverture (5.1) du conduit (2, 5) disposée dans une région inférieure de l'ensemble (1), un capteur de température (6) disposé derrière l'ouverture (5.1), une deuxième ouverture (4) du conduit (2, 5) disposée dans la région supérieure de l'ensemble (1), et un dispositif de chauffage (7, 9) disposé dans le conduit (2, 5) s'étendant verticalement ou obliquement vers l'arrière, pour produire une convexion dans le conduit (2, 5), **caractérisé en ce que**
- l'on réalise dans l'élément de commande (1) un guidage d'air fermé de l'habitacle du véhicule au conduit (2, 5), de sorte qu'un conduit de convexion (2, 5) soit formé et **en ce que**
- l'on dispose un capteur de température supplémentaire (8) à proximité de la deuxième ouverture (4) du conduit de convexion (2, 5).

2. Ensemble dans un élément de commande (1), **caractérisé en ce que** la première et/ou la deuxième ouverture (5.1, 4) est fermée au moyen d'une grille (5.2) et est disposée derrière le panneau avant.

3. Ensemble dans un élément de commande (1) selon l'une quelconque ou plusieurs des revendications précédentes, **caractérisé en ce que** le conduit de convexion (2, 5) est formé par un tuyau en cuivre.

4. Ensemble dans un élément de commande (1) selon la revendication 3, **caractérisé en ce que** l'on utilise comme source de chaleur (7) une résistance en fil métallique qui est enroulée dans la région supérieur autour du tuyau en cuivre.

5. Ensemble dans un élément de commande (1) selon l'une quelconque ou plusieurs des revendications 1 et 2, **caractérisé en ce que** le conduit de convexion (2, 5) est fabriqué en plastique.

6. Ensemble dans un élément de commande (1) selon la revendication 5, **caractérisé en ce que** l'on utilise comme source de chaleur (7) une feuille chauffante ou des résistances (9) posées dans le conduit.

7. Ensemble dans un élément de commande (1) selon l'une quelconque ou plusieurs des revendications 1 à 6, **caractérisé en ce que** l'on incorpore à l'intérieur d'un appareil de climatisation un capteur de température supplémentaire.

8. Ensemble dans un élément de commande (1) selon l'une quelconque ou plusieurs des revendications 1 à 7, **caractérisé en ce que** l'ajustement d'au moins un volet de ventilation peut être pris en compte dans l'appareil de climatisation.
